# FASCICULE DE BREVET EUROPEEN

(11) **EP 3 710 336 B1**
(45) Date de publication et mention de la délivrance du brevet: **30.11.2022**
(21) Numéro de dépôt: 18786764.3
(22) Date de dépôt: 15.10.2018
(51) Int. Cl.: B62D 15/02, B62D 1/28

(54) **PROCÉDÉ ET SYSTÈME DE COMMANDE D'UN VÉHICULE AUTOMOBILE MUNI D'UN SYSTÈME DE CENTRAGE DE LIGNE**
VERFAHREN UND SYSTEM ZUR STEUERUNG EINES KRAFTFAHRZEUGS MIT EINEM LINIENZENTRIERSYSTEM
METHOD AND SYSTEM FOR CONTROLLING A MOTOR VEHICLE PROVIDED WITH A LINE CENTRING SYSTEM

(30) Priorité: 15.11.2017 FR 1760726
(43) Date de publication de la demande: 23.09.2020
(73) Titulaire: Renault s.a.s, 92100 Boulogne Billancourt (FR)
(72) Inventeur: CANDAS, Christophe, 28260 La Chaussee d'Ivry (FR); KUNC, Jerome, 27950 La Chapelle Reanville (FR)
(74) Mandataire: Renault Group
(86) Numéro de dépôt international: PCT/EP2018/078003
(87) Numéro de publication internationale: WO 2019/096511

(56) Documents cités:
- JP-A- 2005 289 291
- JP-A- 2007 326 452
- US-A1- 2008 262 676

## Description

L'invention a pour domaine technique les systèmes d'aide à la conduite, et plus particulièrement les systèmes de centrage de ligne.

Parmi les systèmes d'aide à la conduite d'un véhicule automobile, on connaît les systèmes de maintien de ligne LKA (Acronyme anglophone pour « Lane Keeping Assist ») qui aident un conducteur à maintenir son véhicule dans la voie délimitée par des marquages au sols. En cas d'écart du véhicule sans que les clignotants de changement de direction aient été activés, le véhicule outrepasse la commande du conducteur et redresse la trajectoire.

Le système de centrage de ligne LCA (acronyme anglophone pour « Lane Centering Assist ») est une évolution de ces systèmes et assiste le conducteur en centrant le véhicule au milieu de la voie. Lorsque le système est actif, le conducteur n'exerce plus d'action sur le volant.

Afin d'autoriser l'activation du système de centrage de ligne LCA, un certain nombre de critères sont vérifiés, dont les critères suivants:
- L'état du véhicule, des actionneurs et des capteurs,
- La position du véhicule dans la voie, son centrage initial et le rayon de courbure du virage, et
- L'activité du conducteur.

Jusqu'alors, l'activité du conducteur était déterminée par le couple qu'il applique sur volant.

Pour valider le critère d'activité du conducteur, il faut que la valeur absolue du couple appliquée sur le volant soit inférieure à un seuil pendant une durée donnée. Cependant, lorsque le conducteur maintient le véhicule dans une courbe, le couple qu'il applique est important et augmente avec le rayon de courbure et la vitesse.

Selon le seuil choisi, le système de centrage de ligne LCA peut ne pas être activable lorsque le véhicule est en courbe. Ainsi, actuellement, le système de centrage de ligne LCA ne peut être activé que lorsque le véhicule évolue en ligne droite.

De prime abord, la solution à cette situation serait d'augmenter le seuil. Toutefois, cette solution ne fonctionne pas car le seuil ainsi augmenté rentre en conflit avec le seuil de couple de reprise de contrôle par le conducteur lorsque le système de centrage de ligne LCA est actif.

En effet, la reprise de contrôle par le conducteur compare, dès lors que le système de centrage de ligne LCA est activé, le couple appliqué au volant à un seuil ne dépendant ni du rayon de courbure ni de la vitesse.

Or, le LCA non activé et le véhicule en courbe, le couple à appliquer sur le volant pour que le véhicule maintienne sa trajectoire augmente en fonction de la vitesse et du rayon de courbure.

Ainsi, si le seuil de couple pour l'activation du LCA est augmenté, il peut se rapprocher dangereusement du seuil de couple pour la reprise de commande du conducteur lorsque le LCA est activé, seuil de couple de reprise qui est supérieur au seuil de couple d'activation, voire le dépasser ce qui pourrait mener à une interdiction d'activation du LCA.

Il existe donc un problème concernant la détermination du critère d'activité du conducteur pour l'activation d'un système de centrage de ligne LCA lorsque le véhicule évolue dans un virage.

De l'état de la technique, on connaît les documents EP2188168B1, FR3022515A1, EP2248710A1, US20150094915A1, EP1547887A1, WO2011110156A2. Le document JP 2005 28929 divulgue par exemple, un dispositif de contrôle de direction capable de prévenir une dérive de direction en générant un couple de direction auxiliaire par l'intermédiaire d'un moteur électrique. Le troisième mode de réalisation comprend une étape S301 de détermination du couple de force de direction par un capteur de couple 102 en liaison avec le volant, une étape S302 de détermination de la vitesse de changement du couple de force de direction, des étapes de comparaison S303, S305 de la vitesse de changement du couple de force de direction à des valeurs de seuil puis, si la vitesse de changement du couple de force de direction est inférieure à une valeur de seuil, une étape de comparaison S306 d'un compteur 203a à un seuil prédéterminé. Si le compteur est supérieur ou égal au seuil prédéterminé, le procédé se poursuit par une étape S308 au cours de laquelle un événement d'interdiction de suppression du taux de lacet, noté Fen, est réglé à 0. Toutefois, aucune de ces documents ne traite de l'activation d'un système de centrage de ligne LCA lorsque le véhicule évolue dans un virage.

Le problème technique n'est donc pas résolu par l'état de la technique.

L'invention a pour objet un procédé de commande d'un véhicule automobile muni d'un système de centrage de ligne et un moyen de détermination du couple appliqué par le conducteur sur le volant.

Le procédé comprend les étapes suivantes :
on détermine le couple de force appliqué par le conducteur sur le volant,
on détermine la valeur absolue de la dérivée par rapport au temps du couple de force déterminé,
on détermine si la valeur absolue de la dérivée du couple de force est inférieure à un seuil de couple de force prédéterminé,
on détermine la durée écoulée depuis que la valeur absolue de la dérivée par rapport au temps du couple de force déterminé est inférieure au seuil de couple de force prédéterminé,
on détermine si la durée écoulée est au moins égale à une durée prédéterminée,

Si tel est le cas, on émet un signal d'autorisation concernant l'activité du conducteur à destination du système de centrage de ligne.

Le seuil de couple de force prédéterminé est compris entre -2 Nm/s et 2 Nm/s.

La durée prédéterminée peut être égale à 1s.

Un autre objet de l'invention est un système de commande d'un véhicule automobile muni d'un système de centrage de ligne et d'un moyen de détermination du couple appliqué par le conducteur sur le volant.

Le système de commande comprend un moyen de calcul apte à déterminer la valeur absolue de la dérivée par rapport au temps du couple de force déterminé, un premier moyen de comparaison de la valeur absolue de la dérivée du couple de force à un seuil de couple de force prédéterminé, apte à émettre un signal à destination d'un moyen de détermination d'une durée écoulée lorsque la valeur absolue de la dérivée du couple de force est inférieure à un seuil de couple de force prédéterminé, un moyen de détermination d'une durée écoulée apte à déterminer la durée écoulée, depuis le début de la réception d'un signal du premier moyen de comparaison indiquant que la valeur absolue de la dérivée du couple de force est inférieure au seuil de couple de force prédéterminé, et un deuxième moyen de comparaison de la durée écoulée à un seuil, apte à émettre un signal d'autorisation concernant l'activité du conducteur à destination d'un système de centrage de ligne, lorsque la durée écoulée est au moins égale à la durée prédéterminée.

Le moyen de détermination du couple appliqué par le conducteur sur le volant peut être un capteur de force disposé sur l'axe du volant.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un système de commande selon l'invention,
- la figure 2 illustre les principaux éléments d'un procédé de commande selon l'invention.

La solution du problème technique proposée ici repose sur la détection d'un maintien par le conducteur d'une trajectoire stable du véhicule. Pour cela, le couple qu'il applique au volant est dérivé, et, si la valeur absolue de cette dérivée est inférieure à un seuil prédéterminé pendant une durée prédéterminée, l'activation est autorisée.

La valeur du seuil de la dérivée du couple est à ajuster pour chaque véhicule. Elle prend notamment une valeur comprise entre -2 Nm/s et 2 Nm/s.

La durée prédéterminée est à ajuster pour chaque véhicule. Elle peut notamment prendre une valeur égale à 1s.

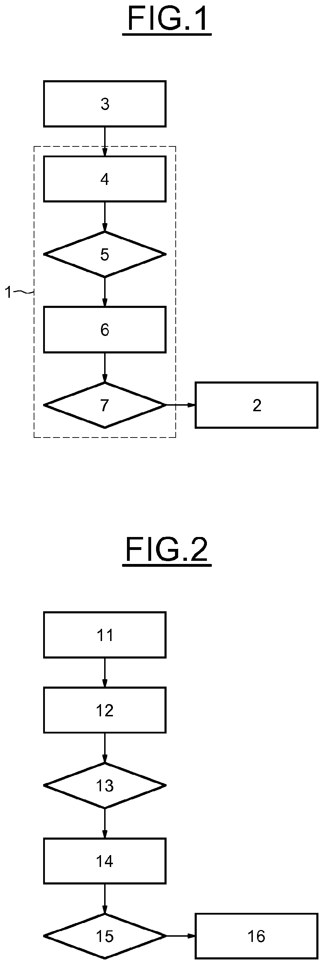

Sur la figure 1, on peut voir que le système de commande 1 d'un véhicule automobile muni d'un système de centrage de ligne LCA 2 et d'un moyen de détermination 3 du couple appliqué par le conducteur sur le volant comprend un moyen de calcul 4 apte à déterminer la valeur absolue de la dérivée par rapport au temps du couple de force déterminé, un premier moyen de comparaison 5 de la valeur absolue de la dérivée du couple de force à un seuil de couple de force prédéterminé, un moyen de détermination 6 d'une durée écoulée et un deuxième moyen de comparaison 7 de la durée écoulée à un seuil.

Le moyen de détermination 2 du couple appliqué par le conducteur sur le volant peut être par exemple un capteur de force disposé sur l'axe du volant ou de façon interne dans le système de direction.

Le premier moyen de comparaison 5 de la valeur absolue de la dérivée du couple de force à un seuil de couple de force prédéterminé est apte à émettre un signal à destination d'un moyen de détermination 6 d'une durée écoulée lorsque la valeur absolue de la dérivée du couple de force est inférieure à un seuil de couple de force prédéterminé.

Le moyen de détermination 6 d'une durée écoulée est apte à déterminer la durée écoulée, depuis le début de la réception d'un signal du premier moyen de comparaison 5 indiquant que la valeur absolue de la dérivée du couple de force est inférieure au seuil de couple de force prédéterminé.

Le deuxième moyen de comparaison 7 d'une durée écoulée est apte à comparer la durée écoulée émise par le moyen de détermination 6 d'une durée écoulée à une durée prédéterminée. Lorsque la durée écoulée est au moins égale à la durée prédéterminée, le deuxième moyen de comparaison 7 émet un signal d'autorisation concernant l'activité du conducteur à destination d'un système de centrage de ligne LCA 2.

L'homme du métier comprendra que le procédé est répété périodiquement, par exemple à la période d'échantillonnage du capteur.

La durée écoulée déterminée par le moyen de détermination 6 d'une durée écoulée est alors déterminée comme le nombre de périodes consécutives pendant lesquelles on a reçu un signal indiquant que la valeur absolue de la dérivée du couple de force est inférieure au seuil de couple de force prédéterminé. Il peut être prévu qu'un nombre prédéterminé de périodes consécutives sans la réception d'un tel signal est nécessaire pour réinitialiser la durée écoulée. Il est ainsi possible de prendre en compte le comportement du conducteur tout en disposant d'une détection robuste vis-à-vis au bruit de mesure ou de traitement.

Le procédé de commande d'un véhicule automobile muni d'un système de centrage de ligne LCA comprend donc les étapes suivantes.

Au cours d'une première étape 11, on détermine le couple de force appliqué par le conducteur sur le volant, par l'intermédiaire d'un moyen de détermination du couple appliqué par le conducteur sur le volant, par exemple, d'un capteur de force disposé sur l'axe de support du volant.

Au cours d'une deuxième étape 12, on détermine la valeur absolue de la dérivée par rapport au temps du couple de force déterminé.

Au cours d'une troisième étape 13, on détermine si la valeur absolue de la dérivée du couple de force est inférieure à un seuil de couple de force prédéterminé,

Au cours d'une quatrième étape 14, on détermine la durée écoulée depuis que la valeur absolue de la dérivée par rapport au temps du couple de force déterminé est inférieure au seuil de couple de force prédéterminé,

Au cours d'une cinquième étape 15, on détermine si la durée écoulée est au moins égale à une durée prédéterminée.

Si tel est le cas, au cours d'une sixième étape 16, on émet un signal d'autorisation concernant l'activité du conducteur à destination du système de centrage de ligne LCA 2.

## Revendications

1. Procédé de commande d'un véhicule automobile muni d'un système de centrage de ligne (2) et un moyen de détermination du couple appliqué par le conducteur sur le volant (3),
**caractérisé par le fait qu'**il comprend les étapes suivantes :
on détermine le couple de force appliqué par le conducteur sur le volant,
on détermine la valeur absolue de la dérivée par rapport au temps du couple de force déterminé,
on détermine si la valeur absolue de la dérivée du couple de force est inférieure à un seuil de couple de force prédéterminé,
on détermine la durée écoulée depuis que la valeur absolue de la dérivée par rapport au temps du couple de force déterminé est inférieure au seuil de couple de force prédéterminé,
on détermine si la durée écoulée est au moins égale à une durée prédéterminée,
si tel est le cas, on émet un signal d'autorisation concernant l'activité du conducteur à destination du système de centrage de ligne (2), le seuil de couple de force prédéterminé étant compris entre - 2 Nm/s et 2 Nm/s.

2. Procédé de commande selon l'une quelconque des revendications précédentes, dans lequel la durée prédéterminée est égale à 1 s.

3. Système de commande d'un véhicule automobile muni d'un système de centrage de ligne (2) et d'un moyen de détermination (3) du couple appliqué par le conducteur sur le volant,
**caractérisé par le fait qu'**il comprend
un moyen de calcul (4) apte à déterminer la valeur absolue de la dérivée par rapport au temps du couple de force déterminé,
un premier moyen de comparaison (5) de la valeur absolue de la dérivée du couple de force à un seuil de couple de force prédéterminé, apte à émettre un signal à destination d'un moyen de détermination (6) d'une durée écoulée lorsque la valeur absolue de la dérivée du couple de force est inférieure à un seuil de couple de force prédéterminé,
un moyen de détermination (6) d'une durée écoulée apte à déterminer la durée écoulée, depuis le début de la réception d'un signal du premier moyen de comparaison (5) indiquant que la valeur absolue de la dérivée du couple de force est inférieure au seuil de couple de force prédéterminé, et
un deuxième moyen de comparaison (7) de la durée écoulée à un seuil, apte à émettre un signal d'autorisation concernant l'activité du conducteur à destination d'un système de centrage de ligne (2), lorsque la durée écoulée est au moins égale à la durée prédéterminée, le seuil de couple de force prédéterminé étant compris entre -2 Nm/s et 2 Nm/s.

4. Système de commande selon la revendication 3, dans lequel le moyen de détermination (2) du couple appliqué par le conducteur sur le volant est un capteur de force disposé sur l'axe du volant.

## Patentansprüche

1. Verfahren zur Steuerung eines Kraftfahrzeugs, das mit einem Spurzentrierungssystem (2) und einer Einrichtung zum Bestimmen des vom Fahrer auf das Lenkrad (3) ausgeübten Moments versehen ist,
**dadurch gekennzeichnet, dass** es die folgenden Schritte umfasst:
man bestimmt das Kraftmoment, das vom Fahrer auf das Lenkrad ausgeübt wird,
man bestimmt den absoluten Wert der zeitbezogenen Ableitung des bestimmten Kraftmoments,
man bestimmt, ob der absolute Wert der Ableitung des Kraftmoments kleiner als ein vorbestimmter Kraftmomentschwellenwert ist,
man bestimmt die Dauer, die vergangen ist, seitdem der absolute Wert der zeitbezogenen Ableitung des bestimmten Kraftmoments kleiner als der vorbestimmte Kraftmomentschwellenwert ist,
man bestimmt, ob die vergangene Dauer mindestens gleich einer vorbestimmten Dauer ist,
wenn dies der Fall ist, sendet man ein Freigabesignal betreffend die Aktivität des Fahrers an das Spurzentrierungssystem (2) aus, wobei der vorbestimmte Kraftmomentschwellenwert zwischen -2 Nm/s und 2 Nm/s beträgt.

2. Verfahren nach einem der vorhergehenden Ansprüche, bei dem die vorbestimmte Dauer 1 s beträgt.

3. System zur Steuerung eines Kraftfahrzeugs, das mit einem Spurzentrierungssystem (2) und einer Einrichtung zum Bestimmen (3) des vom Fahrer auf das Lenkrad ausgeübten Moments versehen ist,
**dadurch gekennzeichnet, dass** es umfasst:
eine Recheneinrichtung (4), die geeignet ist, den absoluten Wert der zeitbezogenen Ableitung des bestimmten Kraftmoments zu bestimmen,
eine erste Einrichtung zum Vergleichen (5) des absoluten Werts der Ableitung des Kraftmoments mit einem Kraftmomentschwellenwert, die geeignet ist, ein Signal an eine Einrichtung zum Bestimmen (6) einer vergangenen Dauer auszusenden, wenn der absolute Wert der Ableitung des Kraftmoments kleiner als ein vorbestimmter Kraftmomentschwellenwert ist,
eine Einrichtung zum Bestimmen (6) einer vergangenen Dauer, die geeignet ist, die vergangene Dauer seit dem Beginn des Empfangs eines Signals der ersten Einrichtung zum Vergleichen (5) zu bestimmen, das angibt, dass der absolute Wert der Ableitung des Kraftmoments kleiner als der vorbestimmte Schwellenwert ist, und
eine zweite Einrichtung zum Vergleichen (7) der vergangenen Dauer mit einem Schwellenwert, die geeignet ist, ein Freigabesignal betreffend die Aktivität des Fahrers an ein Spurzentrierungssystem (2) auszusenden,
wenn die vergangene Dauer mindestens gleich der vorbestimmten Dauer ist, wobei der vorbestimmte Kraftmomentschwellenwert zwischen -2 Nm/s und 2 Nm/s beträgt.

4. System zur Steuerung nach Anspruch 3, bei dem die Einrichtung zum Bestimmen (2) des vom Fahrer auf das Lenkrad ausgeübte Moment ein Kraftsensor ist, der auf der Achse des Lenkrads angeordnet ist.

## Claims

1. Method for controlling a motor vehicle equipped with a line centring assist (2) and a means for determining the torque applied by the driver to the steering wheel (3),
**characterized in that** it comprises the following steps:
the torque applied by the driver to the steering wheel is determined,
the absolute value of the derivative with respect to time of the determined torque is determined,
it is determined whether the absolute value of the derivative of the torque is lower than a preset torque threshold,
the length of time passed since the absolute value of the derivative with respect to time of the determined torque was lower than the preset torque threshold is determined,
it is determined whether the length of time passed is at least equal to a preset length of time,
if such is the case, an authorization signal regarding the activity of the driver is sent to the line centring assist (2), the preset torque threshold being comprised between -2 Nm/s and 2 Nm/s.

2. Controlling method according to any one of the preceding claims, wherein the preset length of time is equal to 1 s.

3. System for controlling a motor vehicle equipped with a line centring assist (2) and with a means (3) for determining the torque applied by the driver to the steering wheel,
**characterized in that** it comprises
a computing means (4) able to determine the absolute value of the derivative with respect to time of the determined torque,
a first means (5) for comparing the absolute value of the derivative of the torque to a preset torque threshold, able to send a signal to a means (6) for determining a length of time passed when the absolute value of the derivative of the torque is lower than a preset torque threshold,
a means (6) for determining a length of time passed able to determine the length of time passed, from the start of the reception of a signal from the first comparing means (5) indicating that the absolute value of the derivative of the torque is lower than the preset torque threshold, and
a second means (7) for comparing the length of time passed to a threshold, able to send an authorization signal regarding the activity of the driver to a line centring assist (2), when the length of time passed is at least equal to the preset length of time, the preset torque threshold being comprised between -2 Nm/s and 2 Nm/s.

4. Controlling system according to Claim 3, wherein the means (2) for determining the torque applied by the driver to the steering wheel is a force sensor placed on the axle of the steering wheel.
